Europäisches Patentamt

European Patent Office

Office européen des brevets

(11) Publication number : **0 500 384 A2**

# EUROPEAN PATENT APPLICATION

(21) Application number : 92301442.7

(22) Date of filing : 21.02.92

(51) Int. Cl.⁵ : **G11B 17/22**

(30) Priority : **22.02.91 JP 28171/91**

(43) Date of publication of application :
**26.08.92 Bulletin 92/35**

(84) Designated Contracting States :
**DE FR GB**

(71) Applicant : **MITSUBISHI DENKI KABUSHIKI KAISHA**
**2-3, Marunouchi 2-chome Chiyoda-ku Tokyo (JP)**

(72) Inventor : **Nakatsukasa, Naoyuki, c/o Mitsubishi Denki K.K.**
**Itami Seisakusho, 1-1, Tsukaguchihonmachi 8-chome**
**Amagasaki-shi, Hyogo-ken (JP)**
Inventor : **Tanaka, Toshihiro, c/o Mitsubishi Denki K.K.**
**Itami Seisakusho, 1-1, Tsukaguchihonmachi 8-chome**
**Amagasaki-shi, Hyogo-ken (JP)**

(74) Representative : **Lawson, David Glynne et al**
**MARKS & CLERK 57-60 Lincoln's Inn Fields London WC2A 3LS (GB)**

(54) **Disk cartridge transportation apparatus.**

(57) A disk cartridge transportation apparatus includes a carrier mechanism supported for movement along a guide shaft for transporting disk cartridges between a disk cartridge stocker and a recording/reproducing unit. The carrier mechanism includes a lift base being movable along the guide shaft, and a cartridge transporting mechanism supported on the lift base for movement between the stocker and the recording/reproducing unit. A support member is supported for rotation on the lift base and extends perpendicularly with respect to the guide shaft. A rotating mechanism including a first motor is mounted on the support member for rotating it with respect to the lift base. A cartridge holding mechanism for holding a disk cartridge is capable of advancing and retreating along the support member with respect to the disk cartridge stocker and the recording/reproducing unit. A drive mechanism including a second motor is mounted on the support member for moving the cartridge holding means along the support member. The first and second motors are connected to a controller via a single flexible cable. Thus, the apparatus is inexpensive to manufacture and is high in assembling efficiency.

FIG. 2

EP 0 500 384 A2

## BACKGROUND OF THE INVENTION

The present invention relates to a disk cartridge transportation apparatus, which can transport a desired one of a large number of disk cartridges, each of which receives therein a disk as an information recording medium, from a stocker to a recording/reproducing unit by means of a carrier mechanism for reading or writing information from or onto the disk in the cartridge, and then returning the cartridge to the stocker. More particularly, it relates to a disk cartridge transportation apparatus in which the carrier mechanism is connected to a controller via flexible cables.

A typical example of a conventional disk cartridge transportation apparatus of the above type is disclosed in, for instance, Japanese Patent Laid-Open No. 61-258,3666.

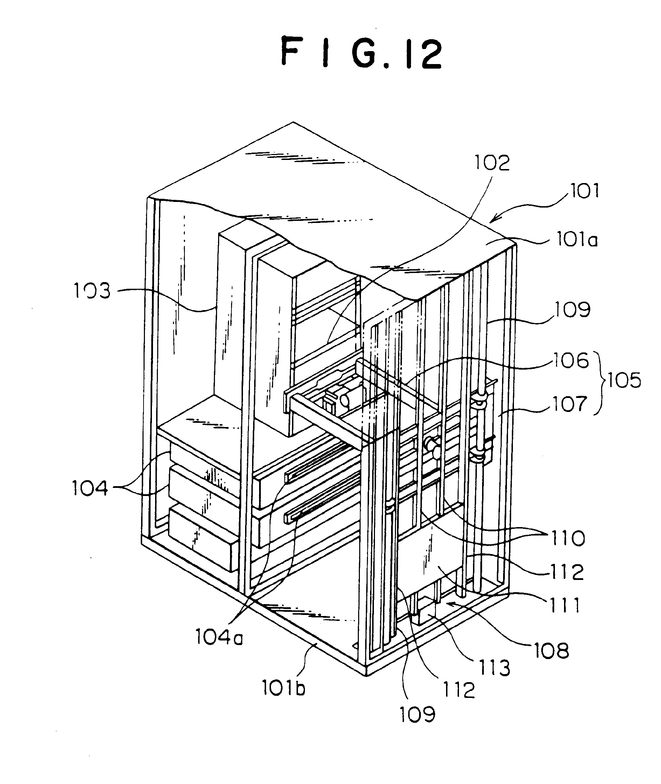

Figure 12 shows such a disk cartridge transportation apparatus as disclosed in the above reference, which is mounted on a disk memory system. Referring to this Figure, a box-like housing 101 accommodates a disk cartridge stocker 103, in which a number of disk cartridges 102 (hereinafter merely referred to as cartridges) each receiving therein, as an information recording medium, a disk such as an optical disk, a magnetic disk and the like are stocked in a horizontal state and in vertical alignment. Below the stocker 103, two recording/reproducing units 104 are disposed for reading and writing information from and onto the disks in the disk cartridges 102. The housing 101 further accommodates a carrier mechanism 105, which serves to selectively take out a cartridge 102 from the stocker 103, load the same into one of the recording/reproducing units 104 and return the cartridge 102 from the recording/reproducing unit 104 to the stocker 103.

The carrier mechanism 105 includes a cartridge transporting mechanism 106, a vertically movable lift base 107 and a lift mechanism 108. The cartridge transporting mechanism 106 serves to set and take out cartridges 102 into and from the stocker 103 and the recording/reproducing units 104. The lift base 107 comprises a rectangular frame carrying the cartridge transporting mechanism 106. The lift mechanism 108 serves to move the lift base 107 to a position corresponding to a desired disk cartridge 102 accommodated in the stocker 103 and also serves to bring the desired or selected cartridge 102 to one of the recording/reproducing units 104.

The lift mechanism 108 includes a pair of guide shafts 109, a pair of conveyer belts 110 and a motor 113. The pair of guide shafts 109 extend vertically in the housing 101 with their upper and lower ends secured to the top and bottom walls 101a and 101b of the housing 101, and they guide the lift base 107 in the vertical movement thereof. The conveyer belts 110 are passed around driven and drive pulleys (not shown) mounted on the top and bottom walls 101a

and 101b of the housing 101, and are coupled to the lift base 107. The motor 113 is operatively coupled to the drive pilleys for driving the drive pulleys so as to drive the conveyer belts 110. To the conveyer belts 110 is secured a rectangular balance weight 111 on the side of the driven pulleys opposite the lift base 107. The balance weight 111 is vertically moved along a pair of vertically extending guides 112.

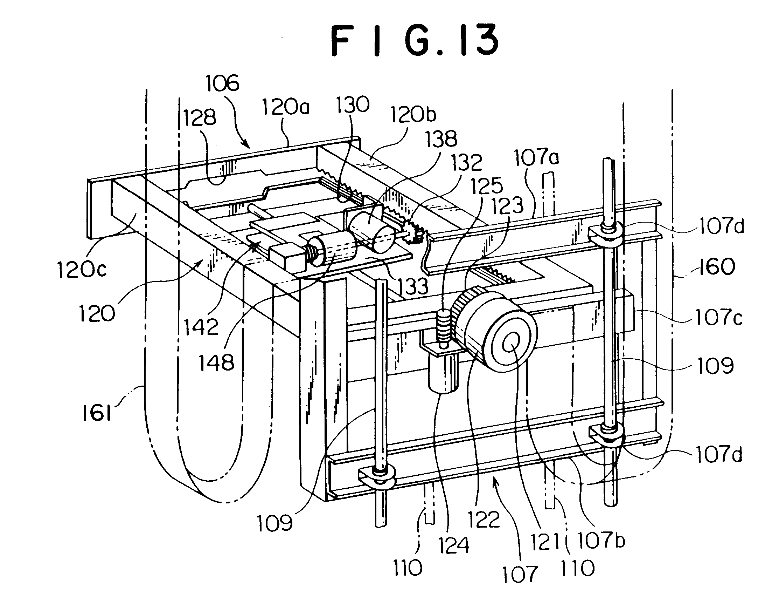

The lift base 107, as shown in Figure 13, comprises a rectangular frame including five rail members. A pair of rail members 107a, 107b respectively extend above and below and parallel to the lift base 107, and they are coupled via sliders 107d to the guide shafts 109 for vertical movement therealong.

The cartridge transporting mechanism 106, as shown in Figure 13, has a rectangular support frame 120 and a support shaft 121 secured thereto. The support shaft 121 is supported for rotation via a bearing 122 by an intermediate rail member 107c which is disposed between and parallel to the upper and lower rail members 107a, 107b of the lift base 107. The bearing 122 has an integral worm wheel 123 in mesh with an worm shaft 125 coupled to the rotary or output shaft of a motor 124, which is mounted on the intermediate rail member 107c. The motor 124 is connected to a controller (not shown) via a flexible flat cable 160, and its operation is controlled by the control unit via the flat cable 160. When the motor 124 is energized to rotate, the support frame 120 is driven to rotate by 180 degrees about the shaft 121 via the worm shaft 125 and the worm wheel 123. The rotational motion of the motor 124 around the shaft 121 at this time is followed by the flexible flat cable 160 which has one end thereof connected to the motor 124.

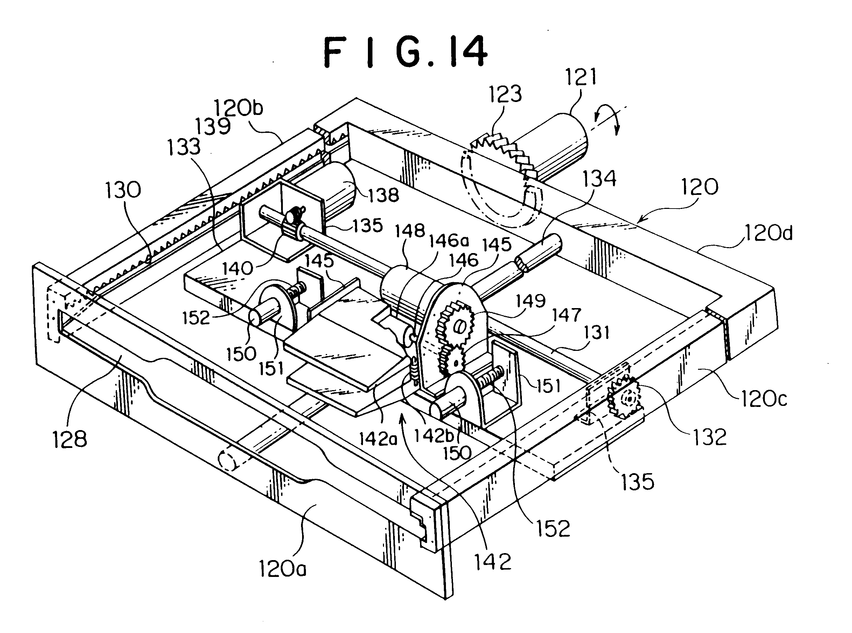

As shown in Figure 14, a front wall or a front frame member 120a of the support frame 120, facing the cartridge stocker 103 and the recording/reproducing units 104, is formed with an inlet opening 128, and a pair of opposed side frame members 120b, 120c extending from the front wall 102a are each provided with a rack 130 extending over their entire length. In mesh with the racks 130 are a pair of pinion gears 132 secured to the opposite ends, respectively, of a synchronous shaft 131 which extends between the opposed side frame members 120b, 120c. A rectangular-shaped flat support plate 133 is disposed between the side frame members 120b and 120c such that it extends substantially over the spacing between the side frame members 120b and 120c. The support plate 133 has its longitudinally central portion supported by a guide shaft 134 for axial or fore-and-aft movement therealong, the guide shaft 134 extending between the front and rear frame members 120a, 120d and having a front and a rear end thereof secured thereto. The support plate 133 is supported on the opposite ends thereof by the opposite end portions of the synchronous shaft 131 through a pair of brackets 135. A motor 138 is supported on one of the brackets 135 and is connected to a controller (not shown) via a flexible flat cable 161. A worm shaft 139 coupled to the rotary or output shaft of the motor 138 is in mesh with a worm wheel 140 secured to the synchronous shaft 131. Thus, when the motor 131 is energized to rotate by the controller via the flexible flat cable 161, the synchronous shaft 131 is driven to rotate in a forward or a reverse direction in accordance with the forward or reverse rotation of the motor 138 via the worm shaft 139 and the worm wheel 140. The pinion gears 132 at the ends of the synchronous shaft 131 are thus caused to roll along the racks 130 of the side frame members 120b and 120c, so that the synchronous shaft 131 is forced to advance and retreat in unison with the support plate 133 in the longitudinal direction of the side frame members 120b and 120c. At this time, the motor 138 is moved in unison with the synchronous shaft 131, with its movement followed by the flexible flat cable 161 connected thereto.

The support plate 133 supports a clamp 142 having a pair of vertically movable or pivotable clamping members 142a capable of clamping a disk cartridge from the upper and lower surfaces thereof. The clamping members 142a are made of a synthetic resin or like material, and they are biased by a tension spring 142b in their closing direction. A pair of bearing brackets 145 erect from the top surface of the support plate 133, and a cam shaft 146, which has a cam 146a in contact with a cam follower (not shown) provided on one of the clamping members 142a of the clamp 142, is rotatably supported at its opposite ends by the bearing brackets 145. The cam shaft 146 has a small-diameter gear 147 secured thereto at one of its ends. The small gear 147 is in meshing engagement with a large-diameter gear 149 secured to the rotary shaft of a motor 148, which is supported by one of the bearing brackets 145. With forward or reverse rotation of the motor 148, the cam shaft 146 is caused to rotate in one or the other direction via the gears 149 and 147, thereby driving the clamping members 142a in the opening or closing direction. On the top surface of the support plate 133, a pair of rod-like stoppers 150 are each mounted by a U-shaped bracket 151 on the opposite sides of the clamp 142. Each of the stoppers 150 is resiliently supported by the corresponding bracket 151 by a coil spring 152 wound therearound. The stoppers 150 serve such that when the clamp 142 is advanced to clamp a cartridge 102, the stoppers 150 are brought into resilient contact with one end face of the cartridge 102 to stop the advancement of the clamp 142.

Although not shown, the above apparatus further includes a cartridge supply/removal mechanism for supplying and removing disk cartridges 102 into and from the housing 101.

Now, the operation of the above-described conventional apparatus will be described. The basic operation of the apparatus is to selectively take out a disk cartridge 102 from the cartridge stocker 103, load it into one of the recording/reproducing units 104, unload and return the cartridge 102 from the recording/reproducing unit 104 back to the stocker 103. As an example, the case, in which a cartridge 102 is loaded into one of the recording/reproducing units 104, will be described.

When a command for taking out a cartridge 102 from the stocker 103 and setting or loading it into one of the recording/reproducing units 104 is given to the apparatus by an operator, an unillustrated controller provided on the apparatus energizes the motor 113 for driving the lift base 107, thus vertically moving the cartridge transporting mechanism 106 up to a position, at which the inlet opening 128 in the front wall 120a of the cartridge transporting mechanism 106 faces a given cartridge 102 in the stocker 103. The motor 113 is then stopped when the lift base 107 has been moved to the desired position. In this state, the motor 138 is actuated by the unillustrated controller via the flexible. flat cable 161 to rotate first in a direction to advance the cartridge transporting mechanism 106 in a horizontal direction so as to clamp the given cartridge 102 in the stocker 103, and then in a direction to retreat the cartridge transporting mechanism 106 so as to take out the cartridge from the stocker 103. When the cartridge 102 is completely taken out from the stocker 103, the motor 113 is again energized to lower the lift base 107 along the guide rails 109 via the conveyer belts 110 down to a position corresponding to the inlet or opening 104a in one of the recording/reproducing units 104. At this time, the cartridge is turned upside down as required by causing the cartridge transporting mechanism 106 to rotate an angle of 180 degrees about the support shaft 121 with respect to the lift base 107. Then, the cartridge transporting mechanism 106 is advanced to insert the cartridge 102 into the opening 104a in one of the recording/reproducing units 104. When the loading of the cartridge 102 has been completed, the clamping of the cartridge 102 by the cartridge transporting mechanism 106 is released under the action of the motor 148, and the cartridge transporting mechanism 106 is retreated to a predetermined position.

When the cartridge 102 is taken out from one of the recording/reproducing units 104 and returned to the predetermined position in the stocker 103, the reverse operation to that described above is carried out.

With the above-described prior art disk cartridge transportation apparatus, the motor 124 for reversing a cartridge 102 upside down is supported on the lift base 107, whereas the motor 138 for reciprocating a cartridge 102 in a horizontal direction is supported on the support plate 133, which is mounted on the support frame 120 which is capable of rotating about the shaft 121 with respect to the lift base 107. Therefore, the flexible flat cable 160 connecting the motor 124 to the unillustrated controller has to follow the rotary motion of the motor 124 about the support shaft 121, while the flat cable 161 connecting the motor 138 to the controller has to follow the reciprocal motion of the motor 138. As a result, these flat cables 160 and 161 are separatelg provided independently of each other, and it has been difficult to unite these cables into a single cable. In addition, the task of separately wiring the two cables 160 and 161 is time-consuming and is thus very inefficient.

## SUMMARY OF THE INVENTION

The present invention seeks to solve the problems inherent in the above-described conventional disk cartridge transportation apparatus, and it has an object of providing a novel and improved disk cartridge transportation apparatus in which a plurality of motors of a carrier mechanism for turning a disk cartridge upside down as well as for transporting it between a stocker and a recording/reproducing unit can be connected to a controller via a single flexible cable for improved assembling efficiency.

To attain the above object of the invention, there is provided a disk cartridge transportation apparatus which includes a carrier mechanism disposed in a housing and being movable along a guide shaft for transporting a cartridge between a disk cartridge stocker and a recording/reproducing unit both disposed in the housing. The carrier mechanism includes a lift base movable along the guide shaft, and a cartridge transporting mechanism supported on said lift base and being movable horizontally between the stocker and the recording/reproducing unit while holding a disk cartridge. The cartridge transporting mechanism comprises: a support member supported for rotation on the lift base and extending perpendicularly with respect to the guide shaft; rotating means including a first motor mounted or the support member for rotating the support member with respect to the lift base; cartridge holding means for holding a disk cartridge and capable of advancing and retreating along the support member with respect to the stocker and the recording/reproducing unit; drive means including a second motor mounted on the support member for driving the cartridge holding means to move along the support member; and a single flexible cable connecting the first and second motors to a controller.

With the disk cartridge transportation apparatus according to the invention, the support member is reversed or turned upside down with respect to the lift base by means of the first motor of the rotating means, and the cartridge holding means is reciprocatively moved along the support member by the second motor of the drive means. Since the first motor of the rotating means and the second motor of the drive means are both provided on the support member, they can be connected to the controller via the single flexible. cable.

The above and other objects, features and advantages of the. invention will become more apparent from the following detailed description when read with reference to the accompanying drawings.

## BRIEF DESCRIPTION OF THE DRAWINGS

Figure 1 is a perspective view, partly broken away, showing the general construction of a disk memory system incorporating a disk cartridge transportation apparatus according to the invention;

Figure 2 is a perspective view showing the disk cartridge transportation apparatus of Figure 1;

Figure 3 is a plan view of the disk cartridge transportation apparatus shown in Figure 1;

Figure 4 is a front elevational view showing the disk cartridge transportation apparatus shown in Figure 1;

Figure 5 is a front view showing a movable member shown in Figures 1 to 4;

Figure 6 is a plan view showing the movable member of Figure 5 when engagement pawls thereof are in a closed state;

Figure 7 is a plan view showing the movable member of Figure 5 when the engagement pawls are in an open state;

Figure 8 is a perspective view showing an example of a disk cartridge receiving therein a disk for use with the invention;

Figure 9 is a perspective view showing a carrier mechanism according to the invention, including sensors for detecting upper and lower limit positions of the carrier mechanism and its related parts;

Figure 10 is a rear view showing a disk cartridge transporting mechanism according to the invention located in an initial position, as looked from the side of a lift base;

Figure 11 is a rear view showing the disk cartridge transporting mechanism located in a reversed position, as looked from the side of the lift base;

Figure 12 is a perspective view, partly broken away, showing an example of a prior art disk memory system incorporating a conventional disk cartridge transportation apparatus;

Figure 13 is a perspective view showing the conventional disk cartridge transportation apparatus; and

Figure 14 is a perspective view, on an enlarged scale, showing in detail part of the conventional disk cartridge transportation apparatus.

## DETAILED DESCRIPTION OF THE PREFERRED EMBODIMENTS

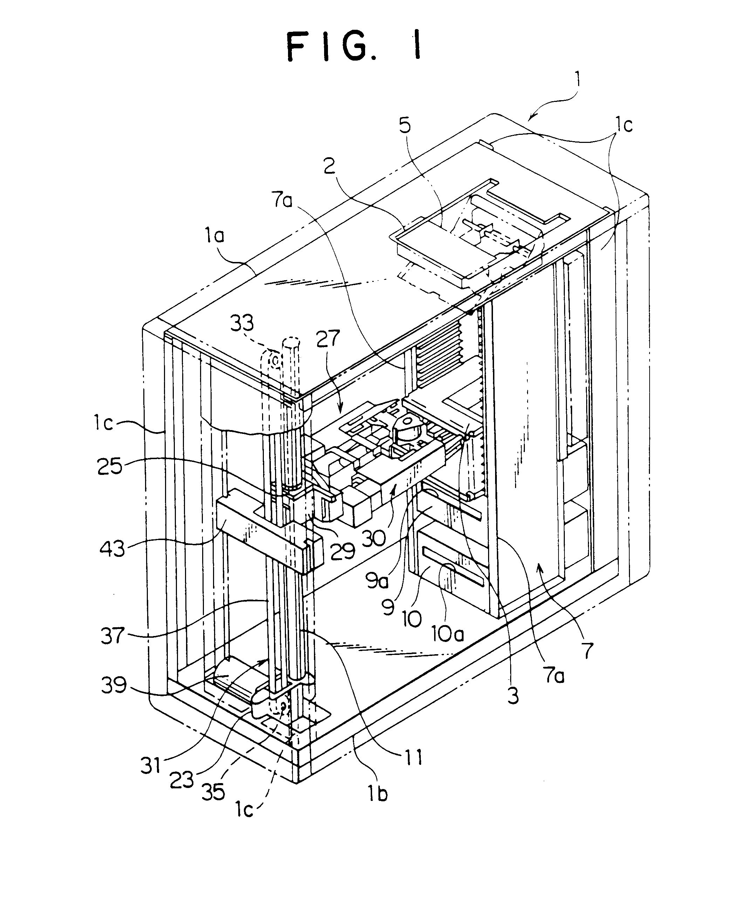

A preferred embodiment of the invention will now be described. with reference to the accompanying drawings. Figure 1 is a perspective view showing the overall structure of a disk memory system incorporating a disk cartridge transportation apparatus according to the invention. Referring to the Figure, the disk memory system includes a box-like housing 1 comprising a frame which is formed by connecting parallel rectangular-shaped upper and lower plates 1a and 1b through four metal frame members 1c which have an L-shaped sectional profile and are secured to the four corners of the upper and lower plates 1a and 1b. As shown in phantom lines in Figure 1, the top and four sides of the housing frame 1 are covered by five panels. The upper plate 1a of the housing 1 has an opening 2, through which a disk cartridge is taken. in and out. Right beneath the opening 2, a cartridge supply/removal mechanism 5 is disposed for supplying and removing disk cartridges 3 to and from the inside of the housing 1. In the housing 1, a cartridge stocker 7 for storing a number of cartridges 3 in a horizontal state is disposed below the cartridge supply/removal mechanism 5. Beneath the cartridge stocker 7, two recording/reproducing units 9 and 10 are disposed one over the other, which serve to read and write information with respect to disks such as, for example, optical disks, magnetic disks and the. like, received in respective disk cartridges 3. The recording/reproducing units 9 and 10 are secured by appropriate attaching means such is screws (not shown) to opposite side plates 7a of the cartridge stocker 7. By loosening or removing the attaching means, the recording/reproducing units 9, 10 can be taken out of the stocker 7 while being moved in a rearward direction along guide rails (not shown) mounted on the side plates 7a. The front opening 7b in the cartridge stocker 7 and cartridge insertion openings 9a and 10a in the recording/reproducing units 9 and 10 are vertically aligned or flush with one another. It is possible to dispose only a single or three or more recording/reproducing units instead of the two units 9 and 10 in the housing 1.

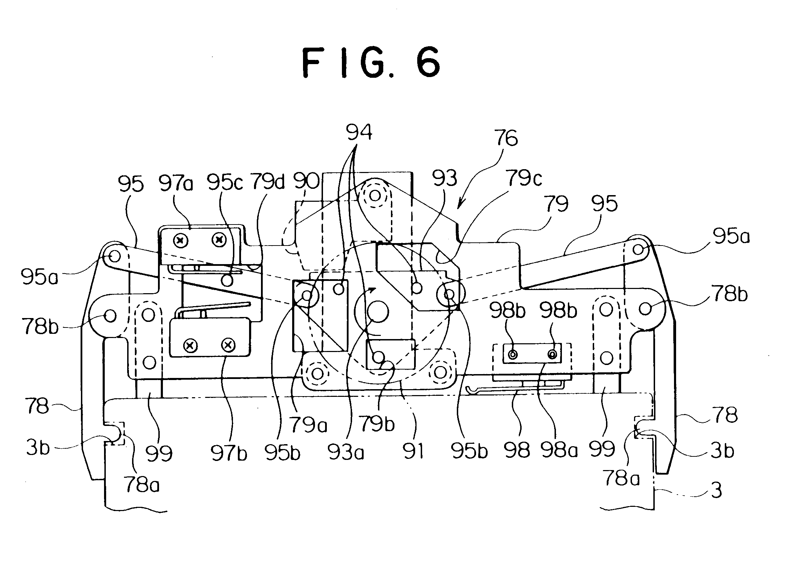

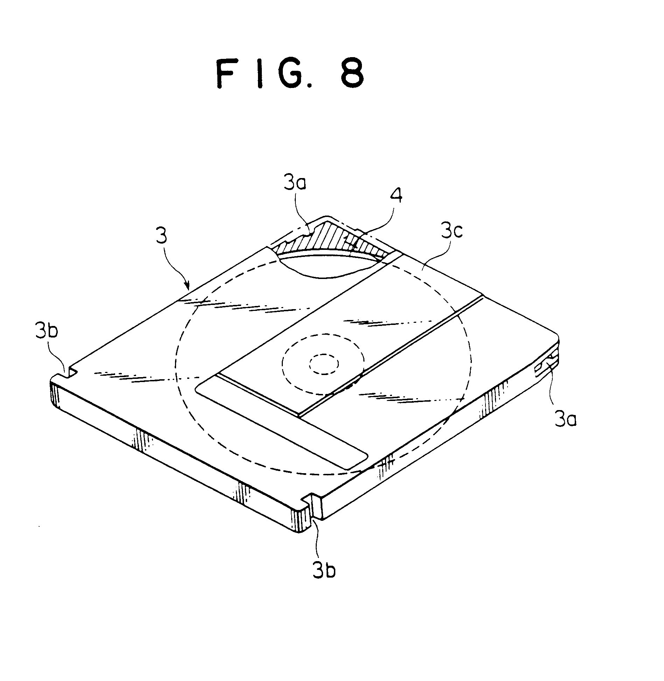

Figure 8 is a perspective view showing an example of a disk cartridge 3 accommodated in the cartridge stocker 7. As shown in Figure 8, the disk cartridge 3 receives a disk 4 such as, for instance, an optical disk, a magnetic disk and the like, as an information recording medium. The cartridge 3 is formed on opposed side edges thereof with a pair of engagement recesses 3a and another pair of engagement recesses 3b. The engagement recesses 3a have an arcuate sectional profile and are adapted to engage with corresponding engagement means (not shown) provided on the inner surfaces of the opposite side walls of the cartridge stocker 7. The engagement recesses 3b are adapted to be hooked by respective engagement pawls 78 of a movable member 76 of a cartridge transporting mechanism 30 (see Figure 6) to be described later. One surface of the cartridge 3 is provided with a shutter 3c, which is opened when recording or reading out information onto or from the disk 4.

As shown in Figure 1, a vertical guide shaft 11 is disposed in the housing 1, with its upper end secured to the upper plate 1a of the housing 1 and its lower end secured to a motor-mounting base 23 secured to the lower plate or base 1b of the housing 1.

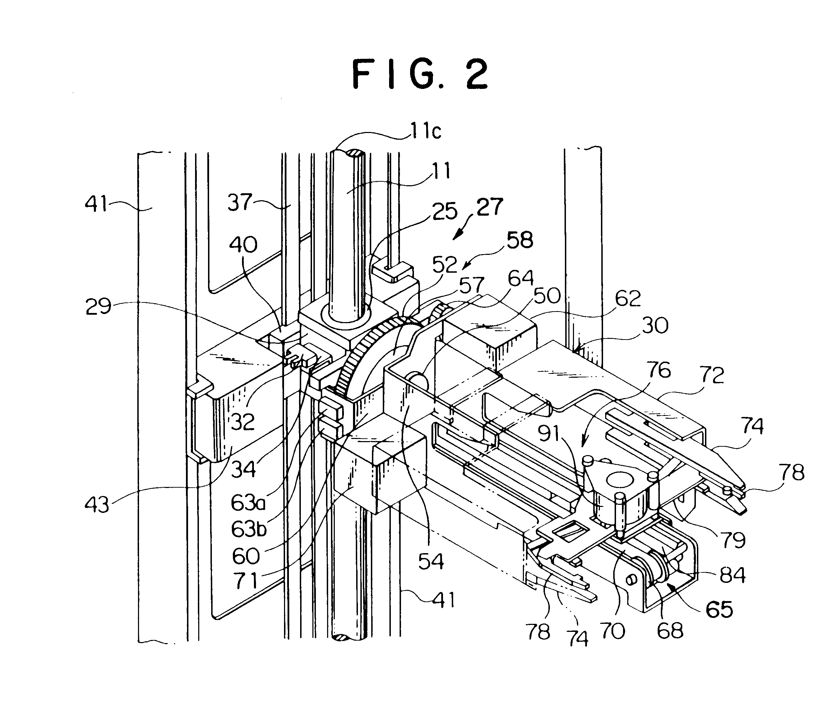

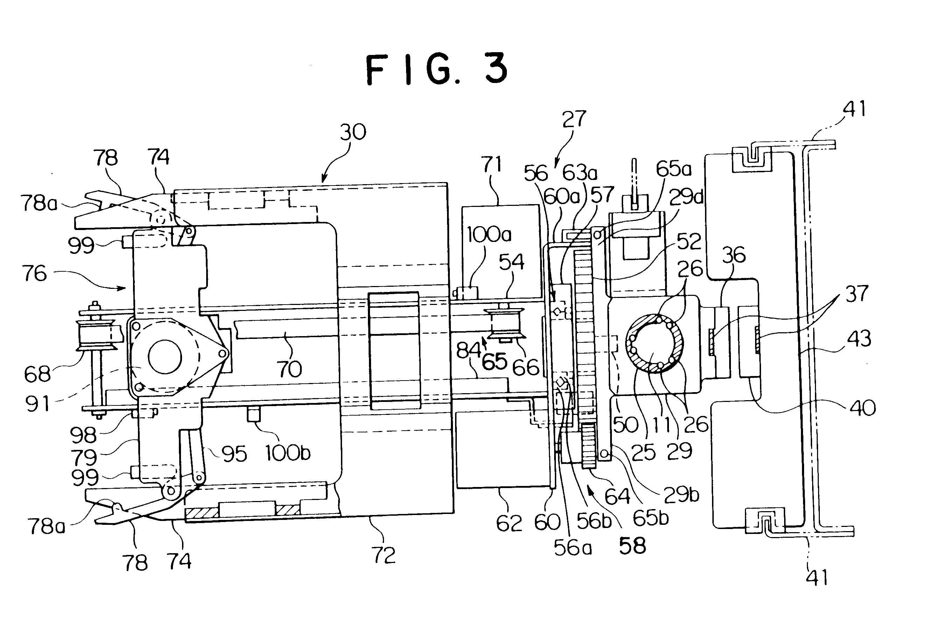

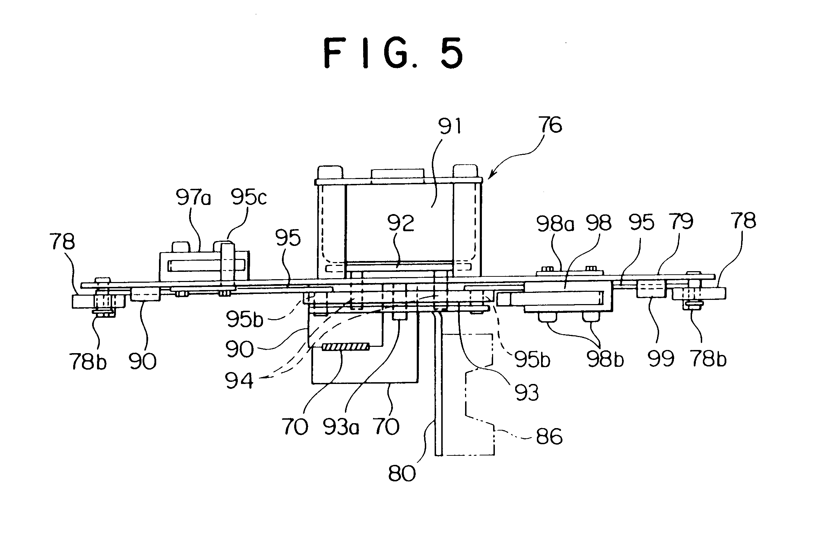

As is shown in Figures 2, 3 and 5, the outer periphery of the guide shaft 11 is formed with a plurality of axially extending straight ball guide grooves or splines 11c, and a ball nut 25 is fitted on the guide shaft 11. Balls 26 (see Figure 3) are provided between the guide shaft 11 and the ball nut 25 so as to roll along the ball splines 11c, whereby the ball nut 25 is vertically moved along the guide shaft 11. Thus, the ball nut 25 is held against rotation with respect to the guide shaft 11 during movement therealong. A carrier mechanism 27 is supported on the guide shaft 11 via the ball nut 25. The carrier mechanism 27 transports cartridges 3 with respect to the cartridge supply/removal mechanism 5, the cartridge stocker 7 and the recording/reproducing units 9 and 10. The carrier mechanism 27 can be moved vertically by a lift mechanism 31 along the guide shaft 11. The carrier mechanism 27 includes a lift base 29 and a cartridge transporting mechanism 30. The lift base 29 is supported for vertical movement on the guide shaft 11 via the ball nut 25. The cartridge transporting mechanism 30 is supported for rotation by the lift base 29, and is adapted to transport a cartridge 3 with respect to the cartridge supply/removal mechanism 5, the cartridge stocker 7 and the recording/reproducing units 9 and 10 in accordance with its horizontal advancing and retreating movement.

The lift mechanism 31, as shown in Figure 1, includes a pair of driven and drive pulleys 33 and 35 disposed in an upper and a lower position in the housing 1, a timing belt or like endless belt 37 passed around the driven and drive pulleys 33 and 35 and coupled to the lift base 29 by a belt retainer 36 (see Figure 3), a drive means 39 in the form of a motor operatively connected to the drive pulley 35 for driving the same, and a balance weight 43 which is coupled by a belt retainer 40 to the endless belt 37 on the side of the driven and drive pulleys 33 and 35 opposite the lift base 29 (see Figures 2 and 3) so that it can be moved vertically along a pair of vertical guide members or guides 41 disposed in the housing 1. The balance weight 43 has a weight substantially equal to the total weight of the lift base 29 and the cartridge transporting mechanism 30 supported thereby for alleviating the load on the motor 39 while the lift base 29 is moved vertically. The drive pulley 35 is secured to one end of the rotary or output shaft of the motor 39, and the driven pulley 33 is mounted for rotation on the upper plate 1a of the housing 1.

The cartridge transporting mechanism 30 has a construction as shown in Figures 2 to 4. It has a main shaft 50 arid a large-diameter gear 52 which are secured to a central portion of the lift base 29. A support member 54 having a U-shaped sectional profile has its stem supported for rotation on the main shaft 50 via a bearing 56. The bearing 56 has its outer race 56a secured by a bearing retainer 57 to the support member 54 and its inner race 56b secured by the large-diameter gear 52 to the main shaft 50. The support member 54 has its stem secured by a bracket 60 to the bearing retainer 57 and extends from the bracket 60 horizontally, i.e., in a direction perpendicular to the guide shaft 11. A first or reversing motor 62 is supported by one end of the bracket 60, which is integral with the stem of the support member 54. The rotary shaft of the motor 62 is provided with a pinion 64, which is in mesh with the large-diameter gear 52. Thus, when the motor 62 is driven, the pinion is caused to revolve about the large-diameter gear 52 while being rotated, thus causing revolution of the motor 62 about the gear 52 to rotate the support member 54 about the main shaft 50. The large-diameter gear 52, motor 62 and pinion 64 together constitute a rotation means 58.

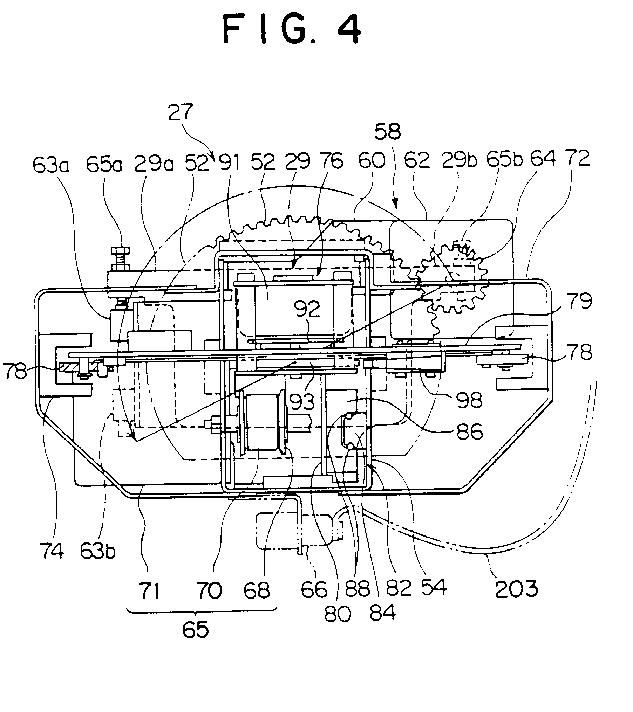

As shown in Figures 2 and 4, the other end of the bracket 60 has a bent portion 60a which extends substantially at right angles. Sensors 63a and 63b are mounted with a vertical spacing on the bent portion 60a, and they detect an original position and a reversed position, respectively, of the support member 54. They are adapted to be actuated or energized when they are brought into contact with the end of screws 65a and 65b which are provided on opposite side arms 29a and 29b of the lift base 29. The original position and reversed position of the support member 54 may be adjusted by turning the screws 65a and 65b. The bent portion 60a of the bracket 60 is also adapted to be brought into contact with the arm 29a of the lift base 29 to serve as a stopper.

For the weight reduction purpose, the support member 54, having the U-shaped sectional profile, is formed by connecting a pair of thin metal sheets having a C-shaped sectional profile at the bottom thereof, the free ends thereof facing the front of the cartridge stocker 7 and the openings 9a and 10a of the recording//reproducing units 9 and 10. A second or reciprocating motor 71 for reciprocating a movable member 76, which will be described later, is mounted on a stem portion of the support member 54 on the side of the main shaft 50 opposite the motor 62. The motor 71 is disposed symmetrically with the reversing motor 62 with respect to the main shaft 50 to provide for balance when the support member 54 is rotated. The rotary shaft of the motor 71 extends into the U-shaped support member 54, and has a drive pulley 66 secured thereto at a free end thereof. A timing belt 70 is passed around the drive pulley 66 and also around a driven pulley 68, which is mounted for rotation on the open end of the U-shaped support member 54. Thus, as the drive pulley 66 is driven to rotate by the motor 71, the timing belt 70 is driven to rotate around the drive and driven pulleys 66 and 68. The drive and driven pulleys 66 and 68, timing belt 70 and motor 61 together constitute a drive means 65.

A box-like cartridge holder case 72, which is open on the front and rear end thereof and also open on the top thereof in a U-shaped fashion, is mounted at central portions of upper and lower walls of its basal or rear portion on the support member 54. When a cartridge 3 is moved by the carrier mechanism 27, it is temporarily accommodated in the holder case 72.

As shown in Figures 2 and 3, a pair of guide members 74 made of a synthetic resin and horizontally facing each other, are mounted on the inner surfaces of the opposite side walls of the cartridge holder case 72. These guide members 74 have free end portions projecting from the open front end of the holder case 72. As shown in Figure 4, the guide members 74 have a channel-shaped cross section and are disposed in a horizontally spaced relation with their open sides facing each other. They are adapted to accommodate engagement pawls 78 of the moving member 76, which is to be described later. The upper and lower walls of the channel-shaped guide members 74 are spaced apart by a distance slightly greater than the thickness of the cartridge 3 so that they can receive and hold the opposite side portions of the cartridge 3. In addition, to allow the engagement pawls 78 in the guide members 74 to spread from each other in horizontal outward directions, the guide members 74 have their tip or free end portions thereof being open or slit on their outer sides.

A movable member 76 is provided on the support member 54 such that it can advance and retreat along the support member 54 in horizontal directions with respect to the movable member 76, cartridge stocker 7 and recording/reproducing units 9 and 10. The movable member 76 has an elongated base plate 79 of a width substantially equal to that of the cartridge 3. A bracket 80 is secured to the lower surface of the base plate 79. The base plate 79 is supported by the support member 54 by a linear bearing 82 which is interposed between the bracket 80 and the support member 54 for movement in the longitudinal direction of the support member 54. A guide rail 84 is secured to the inner surface of the support member 54 on the side thereof opposite the side on which the drive and driven pulleys 66 and 68 are provided. The guide rail 84 extends in the longitudinal direction of the support member 54 substantially over the entire length thereof and has a substantially conical sectional profile. A slider 86 secured to a bracket 80 is engaged with the guide rail 84 and has a groove of substantially the same sectional profile as that of the guide rail 84. A plurality of balls 88 are interposed between the slider 86 and guide rail 81 for circulation in the slider 86. The slider 86 is able to move along the guide rail 84 while the balls 88 are rolling therebetween. A stopper plate 90 is secured to the lower surface of the base plate 78. The timing belt 70 is coupled by a belt retainer 89 to the lower end of the stopper plate 90. With the excursion of the timing belt 70, the base plate 79 is moved along the guide rail 84 of the support member 54 via the stopper plate 90.

On a central portion of the upper surface of the base plate 79 are provided a swinging motor 91 and a rotary plate 92, the latter of which is driven by the swinging motor 91 to swing or rotate in a predetermined angle range. The swinging motor 91 is of an electromagnetic type and, when energized, it is rotated by a predetermined angle, whereas it is returned, when de-energized, to the initial position by an unillustrated return spring incorporated in the motor 91. A substantially triangular-shaped swing lever 93 is mounted for rotation by a pin 94 on the lower surface of the base plate 79. The swing lever 93 is disposed in an opposed relation to a rotary plate 92 with the base plate 79 being interposed therebetween, so that it is rotated in unison with the rotary plate 92 by a plurality of engagement pins 94 which extend downward from the lower surface of the rotary plate 92 into the swing lever 93 for engagement therewith. To permit the swing lever 93 to rotate with the rotation of the rotary plate 92, the base plate 79 has a plurality of holes or apertures 79a, 79b, 79c of appropriate shapes through which the engagement pins 94 extend. When the swinging motor 91 is energized, the rotary plate 92 is caused to rotate in the clockwise direction in Figure 6 by a return spring (not shown) incorporated in the swinging motor 91 until it is brought into engagement with the stopper 90.

On the opposite sides of the base plate 79, a pair of engagement pawls 78 are pivotally supported by pivotal pins 78b. The engagement pawls 78 are each pivotally connected at their basal ends by pivotal pins 95a with one ends of corresponding links 95, which have the other ends thereof pivotally connected by pivotal pins 95b with the opposite sides of the bottom of the substantially triangular swing lever 93. When the swing lever 93 is caused to rotate in the counterclockwise direction from the position shown in Figure 6, the engagement pawls 78 are rotated about the pivotal pins 78b via the links 95 such that their free ends are moved away from each other. The free ends of the engagement pawls 78 have inwardly extending integral engagement projections 78a, which are able to engage in the engagement recesses 3b formed on the opposite side edges of the cartridge 3. When the swinging motor 91 shown in Figure 6 is inoperative, the center 93a of rotation of the swing lever 93 and the axes of the pivotal pins 95a and 95b are found on a straight line. The swing lever 93, links 95 and engagement pawls 78 together constitute a toggle mechanism. With this structure, the opposite side engagement pawls 78 can be simultaneously opened and closed in a symmetrical manner in accordance with the rotation of the swing lever 93. In addition, the engagement pawls 78 are prevented from being opened even when a force is applied to one of the engagement pawls 78 in the opening direction due to the inertia of a cartridge 3 in use. Further, when the movable member 76 is retreated, the engagement pawls 78 are entirely received within the guide members 74 on the opposite sides of the holder case 78. The movable member 76 and the engagement pawls 78 together constitute a cartridge holding means 73.

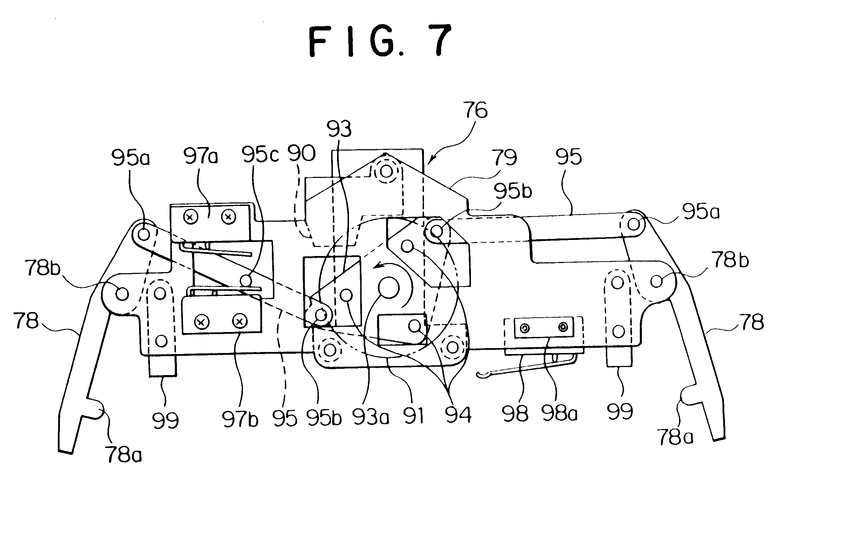

The other link 95 has a pin 95 upstanding perpendicularly from a suitable portion of its top surface to extend through an opening 79d in the base plate 79 to project from the upper surface thereof. A pair of sensors 97a are provided on the upper surface of the base plate 79 at locations on the opposite sides of the pin 95a such that they are disposed in a face-to-face relation at a suitable distance apart from each other. When the pin 95c on the link 95 is brought into contact with one of the sensors 97a and 97b during the rotation of the swing lever 93, the sensors 97a and 97b detect whether the engagement pawls 78 are at their open positions (Figure 6) or at their closed positions (Figure 7).

The base plate 79 is further provided at its front end with a cartridge sensor 98. When the sensor 98 contacts and thus detects one end of a cartridge 3, the motor 71 driving the timing belt 70 is stopped to discontinue the advancement of the movable member 76.

It is required that the sensor 98 be mounted on the base plate 79 with a high degree of accuracy (i.e., within a permissible mounting error of 1 mm or less). To permit accurate adjustment of the mounting position of the sensor 98, the sensor 98 is mounted by a sensor mounting plate 98a and screws 98b on the base plate 79, as shown in Figures 4, 6 and 7. More specifically, the base plate 79 has a plurality of slots (not shown). The sensor mounting plate 98a and the sensor 98 are provided at locations on the opposite sides of the base plate 79 and secured to the same by screws 98a penetrating the slots in the base plate 79. The seniors 97a and 97b are mounted on the base plate 79 in a similar manner so that they can be adjusted for precise positioning.

Mounted on the opposite sides of the base plate 79 are a pair of pusher members 99 which have their free ends slightly projecting from the front end of the base plate 79. When the movable member 76 is advanced, the free ends of the pusher members 99 are brought into contact with one end face of the cartridge 3 to push it forward.

As shown in Figure 3, the opposite side outer surfaces of the support member 54 having the U-shaped sectional profile is provided with sensors 100a and 100b for detecting the presence of the movable member 76 at a predetermined retreated position (at which the cartridge 3 is substantially completely received within the holder case 2) and at a predetermined intermediate position (at which a sufficient portion or area, e.g., more than one half, of the cartridge 3 held by the engagement pawls 78 of the movable member 76 has been inserted into the cartridge stocker 7 or the recording/reproducing unit 9 or 10).

As shown in figure 4, an inverted L-shaped bracket 201 is secured to the lower surface of the holder case 72. On the bracket 201 is mounted a connector 205, which connects all the electrical parts (i.e., the reversing motor 62, reciprocating motor 71, swinging motor 91 and sensors 63a, 63b, 97a, 97b, 98, 100a and 100b and so forth) mounted on the cartridge transporting mechanism 30 to the unillustrated controller via a flexible cable 203 such as a flat cable.

As shown in Figures 2, 3 and 9, a sensor 32 for detecting a vertical position of the carrier mechanism 27 is mounted on the lift base 29 via the retainer 34. In this embodiment, the sensor 32 is an optical sensor having a light-emitting and a light-receiving element 32a and 32b. A vertical positioning plate 209, which has a plurality of slits 207 formed at predetermined vertical intervals and corresponding to respective cartridge storage positions of the cartridge stocker 7 and inlet openings 9a and 10b of the recording/reproducing units 9 and 10, respectively, is disposed in the vicinity of and in parallel with the guide shaft 11. The light-emitting and light-receiving elements 32a and 32b of the sensor 32 are disposed such that they horizontally face each other on the opposite sides of the positioning plate 209. The sensor 32 thus detects a vertical position of the lift base 29 as the light-receiving element 32b receives light emitted from the light-emitting element 32a through one of the slits 207.

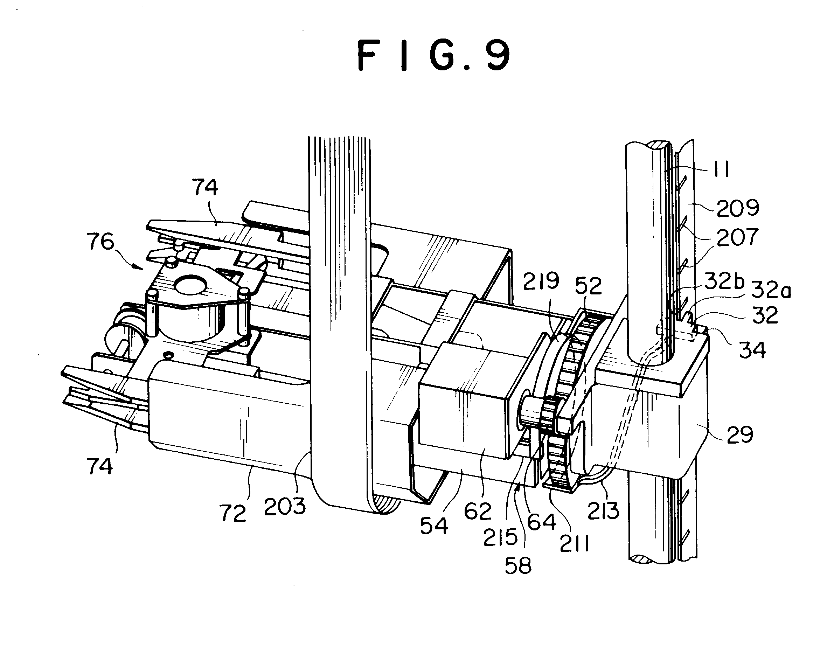

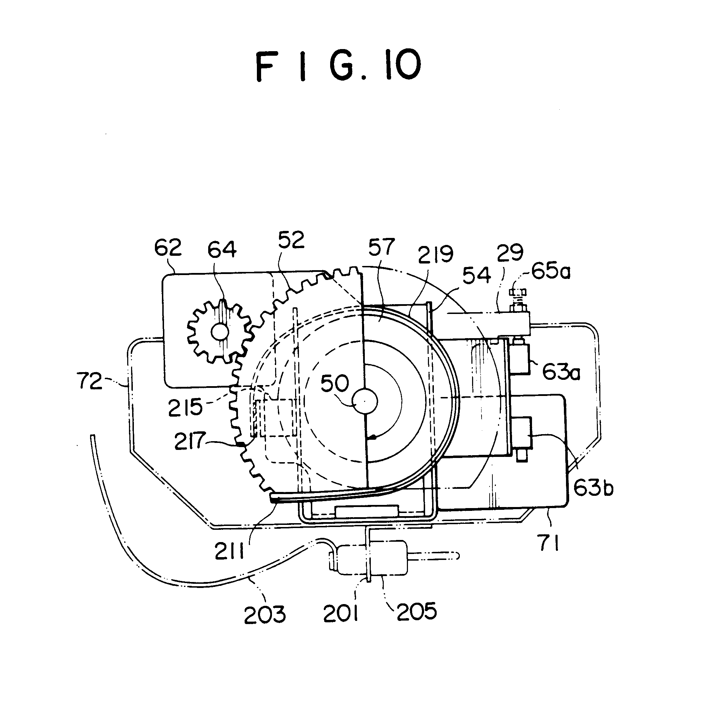

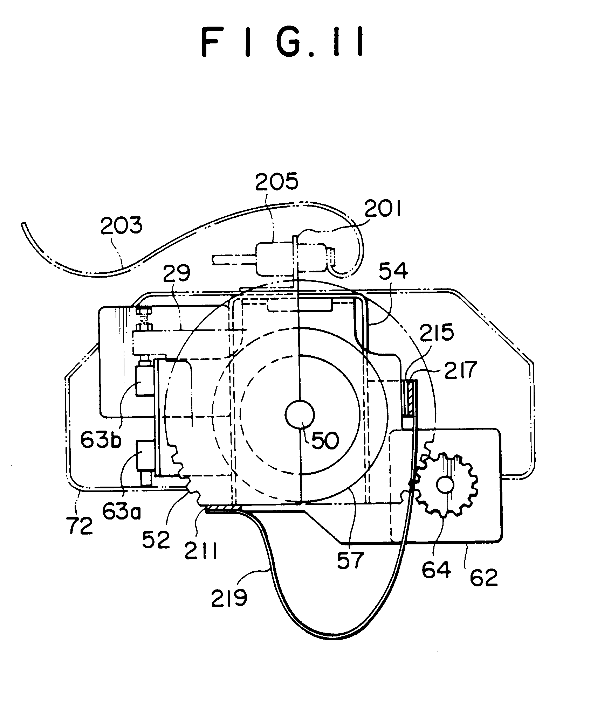

As shown in Figures 9 to 11, the sensor 32 provided on one side of the lift base 29 is connected via a signal cable 213 to a connector terminal 211 which is provided on one side of the notched lower end of the large-diameter gear 52 secured to the lift base 29. Of the support member 54 having the U-shaped sectional profile, the outer side thereof nearer to the reversing motor 62 is provided with a horizontally extending mounting plate 215, which has a free end portion bent-at right angles and extending up to the outer periphery of the bearing retainer 57. The free end of the mounting plate 215 is provided with a connector terminal 217. The connector terminal 217 is connected by a signal cable (not shown) to the connector 205 provided on the bracket 201 on the lower surface of the holder case 72, and it is also connected to a connector terminal 211 on the notched lower portion of the large gear 52 through a flexible printed circuit board 219 which extends along the outer periphery of the annular bearing retainer 57. When the support member 54 is at the reset or initial position as shown in Figure 10 (that is, when the movable member 76 is found above the support member 54, as shown in Figure 9), the flexible printed circuit board 219 is stretched or tightly extends from the connector terminal 211 on the lower portion of the large-diameter gear 52 up to the connector terminal 217 of the mounting ylate 215 such that it is in close contact with the outer periphery of the annular bearing retainer 57. Meanwhile, as shown in Figure 11, with the support member 54 in the reversed state, the flexible printed circuit board 219 is spaced apart from the outer periphery of the bearing retainer 57 and thus slackened down.

The operation of this embodiment will now be described below in detail. When a command is given to select one of the cartridges 3 stored in the stocker 7 and load the selected cartridge 3 into the recording/reproducing unit 9, the controller (not shown) incorporated in the apparatus generates a control signal to energize the motor 39 of the lift mechanism 31, thus driving the drive pulley 35. With the rotation of the drive pulley 35, the endless belt 37 is driven for excursion between the driven and drive pulleys 33 and 35. The lift base 29 coupled to the endless belt 37 is vertically moved via the ball nut 25 along the guide shaft 11, while holding the cartridge transporting mechanism 30 in a horizontal state, to a vertical height or position corresponding to the position of a desired cartridge 3 stored in the stocker 7. When the lift base 29 is thus moved to the desired height or position, the motor 39 is stopped. At this time, the movable member 76 of the cartridge transporting mechanism 30 is in a waiting state at the predetermined intermediate position as detected by the sensor 100b on the support member 54, that is the movable member 76 is at a position spaced apart a predetermined distance from the front surface of the stocker 7.

In this state, the swinging motor 91 is energized to rotate the swing lever 93 in the counterclockwise direction in Figure 6, thus causing through the links 95 the engagement pawls 78 on the opposite sides of the base plate 79 to spread or open away from each other to the open positions shown in Figure 7. When the sensor 98a provided on the base plate 79 detects that the engagement pawls 78 are in their open positions, the motor 71 is driven to rotate in the forward direction to move the timing belt 70 in the feeding direction, thus advancing the movable member 76 of the cartridge transporting mechanism 30 in the horizontal direction along the support member 54 via the linear bearing 82. When the sensor 98 provided on the front end of the base plate 79 of the movable member 76 contacts and detects one end of the target or desired cartridge 3 stored in the stocker 76, the motor 71 is deenergized. As soon as the advancement of the movable member 76 is stopped, the swinging motor 91 is also deenergized so that the swing lever 93 is urged to rotate about the stopper plate 90 in the clockwise direction in Figure 7 under the action of the return spring (not shown) incorporated in the swinging motor 91. Thus, the engagement pawls 78 are pivotally moved inward via the links 95 to the closed positions shown in Figure 6, whereby the engagement projections 78a of the engagement pawls 78 are engaged in the engagement recesses 3b on the opposite sides of the cartridge 3.

In this way, with the engagement projections 78a of the engagement pawls 78 held engaged in the engagement recesses 3b of the cartridge 3, the motor 71 is driven to rotate in the reverse direction to move the timing belt 70 in the returning direction, thus causing the movable member 76 to retreat along the support member 54 toward the lift base 29. With this retreat of the movable member 76, the cartridge 3 is also retreated in unison therewith so that the opposite side edges of the cartridge 3 are being drawn into the channel-shaped guide members 74 attached to the opposite sides of the holder case 72. When the cartridge 3 have been thus sufficiently drawn into the guide members 74 and received in the holder case 72, that is, when the sensor 100a provided on the support member 54 detects that the movable member 76 has been retreated to a predetermined retreated position, the motor 71 is deenergized to stop the retreat of the movable member 76, and the motor 39 is energized to cause vertical movement of the lift base 29 together with the cartridge transporting mechanism 30 to a height or position corresponding to one of the inlet openings 9a and 10a of the recording/reproducing units 9 and 10. At this time, the motor 62 may be energized as required, so that the pinion 64 is driven to revolve around the large-diameter gear 52 from the position of Figure 10 to the position of Figure 11 , thus rotating the support member 54 around the main shaft 50 through an angle of 180 degrees to turn the cartridge 3 upside down. In this connection, the flexible printed circuit board 219, which connects the connector terminal 211 on the notched lower portion of the large-diameter gear 52 secured to the lift base 29 and the connector terminal 217 on the mounting plate 215 secured to the support member 54, is restored from its state tightly wound, without slack or looseness, around the outer periphery of the annular bearing retainer 217 to its slackened state, as shown in Figure 11. Further, in the course of the above operation, the holder case 72 is reversed or turned upside down, so the connector 205 supporting the holder case 72 via the bracket 201 is turned downside up. As a result, the flexible cable 203 coupled to the connector 205 is upwardly rearranged or moved from a lower position as shown in Figure 10 to an upper position as shown in Figure 11 in a suitably bent manner.

When the sensor 32 detects that the lift base 29 is lowered to an appropriate position along the guide shaft 11, the motor 71 is energized to advance the movable member 76 along the support member 54, whereby the free ends of the paired pusher members 99 provided at the front end of the base plate 79 are brought into contact with one end of the cartridge 3 held by the guide members 74 in the holder case 72, urging the cartridge 3 forward along the guide members 74 to insert it into the recording/reproducing unit 9 or 10 through the opening 9a or 10a. At this time, slight gaps formed between the engagement projections 78a on the engagement pawls 78 and the engagement recesses 3b in the cartridge 3, have an effect of reducing frictional resistance during the time when the engagement pawls 78 are being opened. Thus, the required capacity or power of the swinging motor 91 can be reduced.

When the sensor 100b provided on the support member 54 detects that the advancing movable member 76 has passed a predetermined. advanced position, the swinging motor 91 is energized to open the engagement pawls 78. At this time, a major portion of the cartridge 3 has already been inserted in the recording/reproducing unit 9 or 10, and therefore the cartridge 3 will not fall or slip off the opening 9a or 10a of the unit 9 or 10 as a result of the engagement yawls 78 being opened. When the cartridge 3 is inserted into the recording/reproducing unit 9 or 10 with the engagement pawls 78 held open, an unillustrated sensor provided in the recording/reproducing unit 9 or 10 is operated to stop the motor 71.

When the sensor 97a detects the open state of the engagement pawls 78 after the deenergization of the movable member 76, the cartridge 3 is withdrawn to a position, at which the recording and/or reproduction of information is possible, by means of a cartridge loading/unloading mechanism (not shown) incorporated in the recording/reproducing unit 9 or 10. At the same time, the motor 71 is driven to rotate in the reverse direction, causing retreat of the movable member 76. When the movable member 76 is retreated to a predetermined retreated position, the sensor 100a detects this and deenergizes the swinging motor 91 so as to close the engagement pawls 78, thus rendering the cartridge transporting mechanism 30 in a waiting state. Since the engagement pawls 78 are opened while the cartridge 3 is being inserted, the time required for loading or unloading the cartridge 3 can be reduced as compared with the aforementioned prior art apparatus in which the engagement pawls are opened after the cartridge has been completely inserted into the recording/reproducing unit. In addition, since the degree of freedom of the cartridge 3 increases after the engagement pawls 78 have been opened, the cartridge 3 can be inserted very smoothly even if there is a slight deviation or misalignment between the cartridge transporting mechanism 30 and the inlet opening 9a or 10a of the recording/reproducing unit 9 or 10.

As has been shown and described, during the time the movable member 71 is in a reciprocating movement along the support member 54, the flexible cable 203, which is connected to the connector 205 secured via the bracket 201 to the holder case 72, remains in the state shown in Figure 10 or 11 and is never adversely affected by the reciprocating movement of the movable member 76.

When recordation into or reproduction from the cartridge 3 by means of the recording/reproducing unit 9 or 10 is over, the cartridge 3 is returned to the initial position in the stocker 7 by the carrier mechanism 27. This operation is the reverse to the operation described above. In this case, however, when the cartridge 3 is inserted into the stocker 7, a sensor (not shown) provided on a rear portion of the stocker 7 detects the cartridge 3 for stopping the motor 71.

As has been described in the foregoing, according to the invention, a carrier mechanism for transporting a cartridge between a stocker and a recording/reproducing unit disposed in the housing comprises a lift base being movable along a guide shaft, and a cartridge transporting mechanism supported on the lift base for horizontal movement between the stocker and the recording/reproducing units while holding the cartridge. The cartridge transporting mechanism comprises a support member supported for rotation on the lift base and extending perpendicularly with respect to the guide shaft, rotating means including a first or reversing motor mounted or the support member for causing rotation of the support member with respect to the lift base, cartridge holding means capable of advancing and retreating along the support member with respect to the stocker and recording/reproducing units while holding the cartridge, drive means including a second or reciprocating motor mounted on the support member for causing reciprocating motion of the cartridge holding means along the support member, and a single flexible cable connecting the reversing motor of the rotating means and the reciprocating motor of the drive means to a controller. Thus, both of the reversing motor and the reciprocating motor are provided on the support member, which is merely rotated with respect to the lift base, so they can be connected to the controller via the single flexible cable. Accordingly, unlike the prior art apparatus, in which both the reversing and reciprocating motors are. connected to the controller via a plurality of separate flexible cables, only a single flexible cable is needed, thus reducing the manufacturing cost as well as improving the assembling efficiency of the apparatus.

**Claims**

1. A disk cartridge transportation apparatus comprising:

a housing accommodating a disk cartridge stocker and a recording/reproducing unit;

a guide shaft disposed in said housing; and

a carrier mechanism supported for movement along said guide shaft for transporting a disk cartridge between said stocker and said recording/reproducing unit;

said carrier mechanism including:

a lift base being movable along said guide shaft; and

a cartridge transporting mechanism supported on said lift base and being movable horizontally between said stocker and said recording/reproducing unit while holding a disk cartridge;

said cartridge transporting mechanism including:

a support member supported for rotation on said lift base and extending perpendicularly with respect to said guide shaft;

rotating means including a first motor mounted on said support member for rotating said support member with respect to said lift base;

cartridge holding means for holding a disk cartridge and capable of advancing and retreating along said support member with respect to said stocker and said recording/reproducing unit;

drive means including a second motor mounted on said support member for driving said cartridge holding means to move along said support member; and

a single flexible cable connecting said first motor and said second motor to a controller.

2. The disk cartridge transportation apparatus according to claim 1, wherein said rotating means comprises:

a large-diameter gear secured to said lift base; and

a pinion coupled to the shaft of said first motor and being in mesh with said large-diameter gear, said pinion being driven by said first motor to revolve about said large-diameter gear.

3. The disk cartridge transportation apparatus according to claim 2, wherein said carrier mechanism includes various sensors for controlling the operation of said carrier mechanism, said sensors being connected to said controller via said single flexible cable.

# F I G. 1

# F I G. 2

# FIG. 3

EP 0 500 384 A2

# FIG. 4

# F I G. 5

EP 0 500 384 A2

# FIG. 6

# FIG. 7

# F I G. 8

# F I G. 9

EP 0 500 384 A2

# F I G. 10

# F I G. 11

# F I G.12

# F I G. 13

# F I G. 14

EP 0 500 384 A2